# EUROPÄISCHE PATENTANMELDUNG

(11) **EP 3 156 382 A1**
(43) Veröffentlichungstag der Anmeldung: **19.04.2017**
(21) Anmeldenummer: 15189373.2
(22) Anmeldetag: 12.10.2015
(51) Int. Cl.: C04B 26/04, C04B 26/06, C09D 7/12, C09D 109/06

(54) **BESCHICHTUNGSMASSEN, BESCHICHTUNGEN AUS DEN BESCHICHTUNGSMASSEN, BAUTEILE ENTHALTEND DIE BESCHICHTUNGEN, VERFAHREN ZUR HERSTELLUNG DER BESCHICHTUNGEN SOWIE DIE VERWENDUNG DER BESCHICHTUNGSMASSEN**

(71) Anmelder: DAW SE, 64372 Ober-Ramstadt (DE)
(72) Erfinder: Brenner, Dr. Thomas, 64367 Mühltal (DE); Weinhold, Petra, 64572 Büttelborn (DE); Großkopf, Jan, 64367 Mühltal (DE); Lohmann, Alfred, 64372 Ober-Ramstadt (DE); Bombala, Henrich, 64372 Ober-Ramstadt (DE); Hellwig, Peter, 64367 Mühltal (DE)
(74) Vertreter: Metten, Karl-Heinz

(57) **Zusammenfassung**

Die vorliegende Erfindung betrifft Beschichtungsmassen, umfassend mindestens 9 Gew.-%, an Feststoffanteil, bezogen auf das Gesamtgewicht der Beschichtungsmasse, mindestens eines organischen Bindemittels, mindestens ein Hydrophobierungsmittel, mindestens 20 Gew.-%, bezogen auf das Gesamtgewicht der Beschichtungsmasse, mindestens eines ersten Füllstoffs, wobei der erste Füllstoff einen D50-Wert von mindestens 10 µm aufweist, gegebenenfalls mindestens ein Additiv, und Wasser, wobei die Anteile der die Beschichtungsmasse bildenden Komponenten jeweils 100 Gew.-% ergeben. Ferner betrifft die Erfindung eine Beschichtung erhalten oder erhältlich durch Applizieren der erfindungsgemäßen Beschichtungsmasse auf einer beschichtbaren Oberfläche und Trocknen der applizierten Beschichtungsmasse. Außerdem betrifft die Erfindung ein Bauteil, insbesondere eine Wand oder eine Decke, enthaltend auf einer beschichtbaren Oberfläche eine erfindungsgemäße Beschichtung. Schließlich betrifft die Erfindung ein Verfahren zur Herstellung einer erfindungsgemäßen Beschichtung sowie die Verwendung der erfindungsgemäßen Beschichtungsmasse für die, insbesondere einstufige, Herstellung von, insbesondere selbstnivellierenden und/oder oberflächenfertigen und/oder glatten, Wand- und/oder Deckenbeschichtungen.

## Beschreibung

Die vorliegende Erfindung betrifft eine Beschichtungsmasse, Beschichtungen aus der erfindungsgemäßen Beschichtungsmasse, Bauteile wie Wand oder Decke beschichtet mit der erfindungsgemäßen Beschichtungsmasse, ein Verfahren zur Herstellung der erfindungsgemäßen Beschichtung und die Verwendung der erfindungsgemäßen Beschichtungsmasse.

Beschichtungsmassen für Wände und Decken sind dem Fachmann sowohl für den Innenwie auch für den Außenbereich hinlänglich bekannt. Hierbei kommen häufig Putzbeschichtungen zum Einsatz, in welche gegebenenfalls auch ein Armierungsgewebe eingelegt sein kann.

Vielfach wird, um eine optisch ansprechende und technischen Anforderungen gerecht werdende Oberflächenbeschichtung zu erreichen, auf eine Unterputzschicht ein sogenannter Oberputz aufgebracht. Auf die entsprechend getrockneten Beschichtungen wird dann regelmäßig auch noch eine Farbschicht aufgetragen.

Herkömmliche Verfahren zur Verkleidung von Wänden in Rohbauten bzw. im Rohzustand sind vielstufig und zeitaufwändig. Dies trifft selbst auf Trockenbauwände aus Gipskartonplatten zu, welche zumeist großflächig zu verspachteln und/oder zu schleifen sind, um zu einer ansprechenden, mit einer Farbe oder Tapete versehbaren Oberfläche zu gelangen.

Daher lag der vorliegenden Erfindung die Aufgabe zugrunde, mit möglichst wenigen Arbeitsschritten zügig zu einer optisch ansprechenden und technisch hochwertigen Beschichtung für Wände, insbesondere Innenwände, zu gelangen, die vorzugsweise eine Q4-Beschichtung darstellt oder aber die Anforderungen erfüllt, wie sie an eine Q4-Beschichtung gestellt werden.

Demgemäß wurde eine Beschichtungsmasse gefunden, umfassend mindestens 9 Gew.-%, insbesondere mindestens 11 Gew.-%, an Feststoffanteil, bezogen auf das Gesamtgewicht der Beschichtungsmasse, mindestens eines organischen Bindemittels, mindestens ein Hydrophobierungsmittel, mindestens 20 Gew.-%, insbesondere mindestens 30 Gew.-%, bezogen auf das Gesamtgewicht der Beschichtungsmasse, mindestens eines ersten Füllstoffs, wobei der erste Füllstoff einen D50-Wert von mindestens 10 µm, bevorzugt von mindestens 15 µm, besonders bevorzugt von mindestens 30 µm und insbesondere einen D50-Wert im Bereich von 10 bis 60 µm, aufweist, gegebenenfalls mindestens ein Additiv, und Wasser, wobei die Anteile der die Beschichtungsmasse bildenden Komponenten jeweils 100 Gew.-% ergeben.

Mit Hilfe der erfindungsgemäßen Beschichtungsmassen gelangt man in einem Arbeitsgang zu dauerhaft hochwertigen Oberflächen für Wände und Decken. Diese Oberflächen müssen dann in der Regel nicht mehr nachgearbeitet werden, beispielsweise gespachtelt und/oder geschliffen. Insbesondere bedarf es bei Verwendung von Pigmenten und/oder Farbstoffen in den erfindungsgemäßen Beschichtungsmassen nicht mehr des nachträglichen Farbauftrags.

Der erste Füllstoff liegt in der erfindungsgemäßen Beschichtungsmasse in einer zweckmäßigen Ausführungsform in Mengen im Bereich von 20 bis 60 Gew.-%, bevorzugt im Bereich von 25 bis 50 Gew.-% und besonders bevorzugt im Bereich von 30 bis 45 Gew.-%, jeweils bezogen auf das Gesamtgewicht der Beschichtungsmasse, vor.

Solche erfindungsgemäßen Beschichtungsmassen haben sich als besonders zweckmäßig erwiesen, die ferner mindestens einen zweiten Füllstoff umfassen mit einem D50-Wert kleiner 15 µm, bevorzugt kleiner oder gleich 10 µm und besonders bevorzugt kleiner oder gleich 7 µm. Der D50-Wert der zweiten Füllstoffe liegt hierbei insbesondere im Bereich von 1 bis 5 µm. Bei gleichzeitiger Anwesenheit von ersten und zweiten Füllstoffen in den erfindungsgemäßen Beschichtungsmassen verfügt der zweite Füllstoff über einen D50-Wert, der stets kleiner ist als der D50-Wert des ersten Füllstoffs. Der zweite Füllstoff liegt in der erfindungsgemäßen Beschichtungsmasse in einer geeigneten Ausführungsform in Mengen im Bereich von 1 bis 20 Gew.-%, vorzugsweise im Bereich von 2 bis 18 Gew.-% und besonders bevorzugt im Bereich von 3 bis 16 Gew.-%, jeweils bezogen auf das Gesamtgewicht der Beschichtungsmasse, vor, wobei die Anteile der die Beschichtungsmasse bildenden Komponenten jeweils 100 Gew.-% ergeben. Bei gleichzeitiger Anwesenheit von ersten und zweiten Füllstoffen in den erfindungsgemäßen Beschichtungsmassen ist es möglich, zu sehr hochwertig anmutenden Oberflächen zu gelangen, insbesondere zu Beschichtungen mit einer sehr glatten Oberfläche. Dies ist insbesondere auch dann der Fall, wenn der Anteil an dem zweiten Füllstoff, bezogen auf das Gesamtgewicht an erstem und zweitem Füllstoff, im Bereich von 5 bis 45 Gew.-%, bevorzugt im Bereich von 10 bis 40 Gew.-% und besonders bevorzugt im Bereich von 20 bis 35 Gew.-% liegt. Durch den Einsatz der zweiten Füllstoffe gelingt es insbesondere auch, das Deckvermögen der bei Verwendung von mit Pigmenten und/oder Farbstoffen eingefärbten Beschichtungsmassen erhaltenen Beschichtungen nochmals zu verbessern. Wird ein Weißpigment wie Titandioxid verwendet, erhält man einen besonders ausgeprägten Weißgrad.

Die erfindungsgemäßen Beschichtungsmassen können demgemäß ferner mindestens einen Farbstoff oder mindestens ein Pigment oder eine Mischung aus Farbstoff und Pigment enthalten. Bevorzugt werden zur Einfärbung der erfindungsgemäßen Beschichtungsmassen Pigmente eingesetzt. Exemplarisch seien als geeignete Pigmente Titandioxid und Zinksulfid genannt. Selbstverständlich können auch Mischungen an Pigmenten eingesetzt werden. Es hat sich für die Einfärbung der erfindungsgemäßen Beschichtungsmassen als zweckmäßig erwiesen, in diesen Farbstoffe oder Pigmente oder Mischungen aus Farbstoffen und Pigmenten in einer Menge im Bereich von 0,1 bis 20 Gew.-%, vorzugsweise im Bereich von 0,5 bis 15 Gew.-% und besonders bevorzugt im Bereich von 1 bis 15 Gew.-%, jeweils bezogen auf das Gesamtgewicht, einzusetzen.

Pigmente sind regelmäßig im Gegensatz zu Farbstoffen in dem Medium, in das sie eingearbeitet werden, unlöslich. Pigmente können im Sinne der Erfindung sowohl anorganischer wie auch organischer Natur sein. Geeignete Pigmente sind dem Fachmann bekannt. Sie werden regelmäßig in zerkleinerter Form, beispielsweise als Primärteilchen oder als Pigmentagglomerate angeboten. Als geeignete Pigmente seien exemplarisch genannt Eisenoxide, Kupfercarbonate, Kupferhydroxychloride, Kupfercalciumssilikate, Cobaltaluminatblau, Ultramarinblau, Azopigmente, Titandioxid, Zinksulfid und deren beliebige Mischungen. Für die erfindungsgemäßen Beschichtungsmasse besonders geeignete Pigmente, wie zum Beispiel insbesondere Titandioxid, verfügen über eine durchschnittliche Partikelgröße im Bereich von 0,1 bis 5 µm, bevorzugt im Bereich von 0,5 bis 4 µm und besonders bevorzugt im Bereich von 1,0 bis 3 µm.

Solche erfindungsgemäßen Beschichtungsmassen haben sich als besonders geeignet zur Lösung der der Erfindung zugrunde liegenden Aufgabe erwiesen, bei denen der Gesamtanteil an erstem Füllstoff, zweitem Füllstoff und Pigment und/oder Farbstoff, bezogen auf das Gesamtgewicht der Beschichtungsmasse ,im Bereich von 30 bis 60 Gew.-%, bevorzugt im Bereich von 35 bis 60 Gew.-% und besonders bevorzugt im Bereich von 40 bis 55 Gew.-% liegt.

Um aus den erfindungsgemäßen Beschichtungsmassen bereits in einem Arbeitsgang stets einwandfreie Beschichtungen zu erhalten, haben sich solche Beschichtungsmasse als besonders vorteilhaft erwiesen, bei denen der erste Füllstoff eine durchschnittliche Partikelgröße von mindestens 12 µm, bevorzugt von mindestens 20 µm und besonders bevorzugt von mindestens 30 µm, aufweist und/oder dass der erste Füllstoff einen D50-Wert von mindestens 15 µm und bevorzugt von mindestens 20 µm aufweist und/oder der erste Füllstoff einen D10-Wert von mindestens 0,5 µm, bevorzugt von mindestens 1 µm und besonders bevorzugt von mindestens 1,5 µm aufweist und/oder der erste Füllstoff einen D90-Wert von mindestens 60 µm, bevorzugt von mindestens 70 µm und besonders bevorzugt von mindestens 80 µm aufweist. Besonders geeignete Beschichtungsmasse enthaltend einen ersten Füllstoff, insbesondere wie vorangehend spezifiziert, und einen zweiten Füllstoff zeichnen sich dadurch aus, dass der zweite Füllstoff einen D50-Wert von mindestens 0,5 µm, bevorzugt von mindestens 1,0 µm und besonders bevorzugt von mindestens 1,5 µm aufweist und/oder dass der zweite Füllstoff einen D10-Wert von mindestens 0,01 µm, bevorzugt von mindestens 0,05 µm und besonders bevorzugt von mindestens 0,1 µm aufweist und/oder dass der zweite Füllstoff einen D90-Wert von mindestens 2 µm, bevorzugt von mindestens 3 µm und besonders bevorzugt von mindestens 4 µm aufweist.

Besonders geeignete Beschichtungsmassen sind hierbei auch solche, bei denen der erste Füllstoff einen D50-Wert im Bereich von 15 bis 50 µm und bevorzugt im Bereich von 20 bis 40 µm aufweist und/oder der erste Füllstoff einen D90-Wert im Bereich von 60 bis 120 µm, bevorzugt im Bereich von 70 bis 110 µm und besonders bevorzugt im Bereich von 80 bis 100 µm aufweist und/oder der erste Füllstoff einen D10-Wert im Bereich von 0,5 bis 5 µm, bevorzugt im Bereich von 1,0 bis 4 µm und besonders bevorzugt im Bereich von 1,5 bis 3 µm aufweist. Auch wird besonders bevorzugt auf solche erfindungsgemäßen Beschichtungsmassen enthaltend einen ersten Füllstoff, insbesondere wie vorangehend spezifiziert, und einen zweiten Füllstoff zurückgegriffen, bei denen der zweite Füllstoff einen D50-Wert im Bereich von 0,5 bis 10 µm, bevorzugt im Bereich von 1,0 bis 8 µm und besonders bevorzugt im Bereich von 1,5 bis 6 µm aufweist und/oder der zweite Füllstoff einen D90-Wert im Bereich von 2 bis 30 µm, bevorzugt im Bereich von 3 bis 20 µm und besonders bevorzugt im Bereich von 4 bis 15 µm aufweist und/oder der zweite Füllstoff einen D10-Wert im Bereich von 0,01 bis 5 µm, bevorzugt im Bereich von 0,05 bis 4 µm und besonders bevorzugt im Bereich von 0,1 bis 2 µm aufweist.

Auch solche erfindungsgemäßen Beschichtungsmassen lösen die der Erfindung zugrunde liegende Aufgabe besonders zufriedenstellend, bei denen der erste Füllstoff einen D50-Wert im Bereich von 10 bis 60 µm, bevorzugt von 15 bis 50 µm, besonders bevorzugt im Bereich von 20 bis 40 µm, einen D90-Wert im Bereich von 70 bis 110 nm, bevorzugt im Bereich von 80 bis 100 µm, und einen D10-Wert im Bereich von 1,0 bis 4 µm, bevorzugt im Bereich von 1,5 bis 3 µm, sowie gegebenenfalls eine durchschnittliche Partikelgröße von mindestens 20 µm, bevorzugt von mindestens 30 µm, aufweist und/oder bei denen der zweite Füllstoff einen D50-Wert im Bereich von 1,0 bis 8 µm, bevorzugt im Bereich von 1,5 bis 6 µm, einen D90-Wert im Bereich von 3 bis 20 µm, bevorzugt im Bereich von 4 bis 15 µm, und einen D10-Wert im Bereich von 0,05 bis 4 µm, bevorzugt im Bereich von 0,1 bis 2 µm, sowie gegebenenfalls eine durchschnittliche Partikelgröße kleiner oder gleich 10 µm, bevorzugt kleiner oder gleich 7 µm, aufweist.

Unter den Beschichtungsmassen, die mindestens ein Pigment enthalten, sind auch jene bevorzugt, bei denen das Pigment, beispielsweise insbesondere Titandioxid, einen D50-Wert im Bereich von 0,01 bis 8 µm, bevorzugt im Bereich von 0,05 bis 5 µm und besonders bevorzugt im Bereich von 1,0 bis 3 µm aufweist und/oder bei denen das Pigment, insbesondere Titandioxid, einen D90-Wert im Bereich von 0,5 bis 12 µm, bevorzugt im Bereich von 1,5 bis 8 µm und besonders bevorzugt im Bereich von 2,0 bis 5 µm aufweist und/oder bei denen das Pigment, insbesondere Titandioxid, einen D10-Wert im Bereich von 0,01 bis 3 µm, bevorzugt im Bereich von 0,05 bis 1,5 µm und besonders bevorzugt im Bereich von 0,1 bis 1,0 µm aufweist.

Unter den erfindungsgemäßen Beschichtungsmassen enthaltend mindestens einen ersten Füllstoff sind jene besonders geeignet, bei denen der erste Füllstoff eine durchschnittliche Partikelgröße von mindestens 20 µm, bevorzugt von mindestens 30 µm, einen D50-Wert im Bereich von 15 bis 50 µm, bevorzugt im Bereich von 20 bis 40 µm, einen D90-Wert im Bereich von 70 bis 110 µm, bevorzugt im Bereich von 80 bis 100 µm, und einen D10-Wert im Bereich von 1,0 bis 4 µm, bevorzugt im Bereich von 1,5 bis 3 µm, aufweist.

Unter den erfindungsgemäßen Beschichtungsmassen enthaltend den mindestens einen ersten Füllstoff und den mindestens einen zweiten Füllstoff liefern diejenigen Beschichtungsmassen besonders zufriedenstellende Resultate, bei denen der zweite Füllstoff eine durchschnittliche Partikelgröße kleiner oder gleich 10 µm, bevorzugt kleiner oder gleich 7 µm, einen D50-Wert im Bereich von 1,5 bis 8 µm, bevorzugt im Bereich von 2,0 bis 6 µm, einen D90-Wert im Bereich von 4 bis 20 µm, bevorzugt im Bereich von 5 bis 15 µm, und einen D10-Wert im Bereich von 0,05 bis 4 µm, bevorzugt im Bereich von 0,08 bis 2 µm, aufweist.

Ferner sind solche Beschichtungsmassen bevorzugt, bei denen der erste Füllstoff einen D50-Wert von mindestens 10 µm und einen D10-Wert von mindestens 0,5 µm und einen D90-Wert von mindestens 60 µm aufweist oder bei denen der erste Füllstoff einen D50-Wert von mindestens 15 µm und einen D10-Wert von mindestens 1 µm und einen D90-Wert von mindestens 70 µm aufweist oder bei denen der erste Füllstoff einen D50-Wert von mindestens 20 µm und einen D10-Wert von mindestens 1,5 µm und einen D90-Wert von mindestens 80 µm aufweist oder bei denen der erste Füllstoff einen D50-Wert im Bereich von 10 bis 60 µm und einen D90-Wert im Bereich von 60 bis 120 µm und einen D10-Wert im Bereich von 0,5 bis 5 µm aufweist oder bei denen der erste Füllstoff einen D50-Wert im Bereich von 15 bis 50 µm und einen D90-Wert im Bereich von 70 bis 110 µm und einen D 10-Wert im Bereich von 1,0 bis 4 µm aufweist oder bei denen der erste Füllstoff einen D50-Wert im Bereich von 20 bis 40 µm und einen D90-Wert im Bereich von 80 bis 100 µm und einen D10-Wert im Bereich von 1,5 bis 3 µm aufweist.

In einer bevorzugten Weiterentwicklung der erfindungsgemäßen Beschichtungsmassen ist ferner vorgesehen, dass der zweite Füllstoff einen D50-Wert von mindestens 1 µm, bevorzugt von mindestens 1,5 µm und besonders bevorzugt von mindestens 2,0 µm aufweist und/oder dass der zweite Füllstoff einen D10-Wert von mindestens 0,01 µm, bevorzugt von mindestens 0,05 µm und besonders bevorzugt von mindestens 0,08 µm aufweist und/oder dass der zweite Füllstoff einen D90-Wert von mindestens 2 µm, bevorzugt von mindestens 4 µm und besonders bevorzugt von mindestens 5 µm aufweist.

Für die Partikelgrößenanalyse wird in dem hier relevanten Größenbereich der Standard ISO 13320:2009 angewendet, wobei für die Auswertung der Laserbeugungsanalyse die Mie-Theorie zugrunde gelegt wird.

Bei der durchschnittlichen Partikelgröße handelt es sich um das Maß, dass man erhält, wenn die Größe der Partikel durch die Anzahl der Partikel geteilt wird. Die durchschnittliche Partikelgröße, auch mittlere Partikelgröße genannt, stellt das gewichtete arithmetische Mittel unter Berücksichtigung der Häufigkeit der Partikelgrößen dar.

Eine weitere Kenngröße, die regelmäßig für die Partikelgrößenanalyse herangezogen wird, ist der sogenannte Modalwert, auch häufigste Partikelgröße genannt. Bei dem Modalwert handelt es sich um das Maximum der Verteilungsdichtekurve bzw. den Wendepunkt der Verteilungssummenkurve.

Der D50-Wert wird auch Halbwertskomgröße oder Medianwert genannt. Bei dem D50-Wert ist die Gewichtsmenge an Teilchen, die größer ist als der D50-Wert identisch mit der Menge an Teilchen, die kleiner ist als der D50-Wert.

Bei dem D10-Wert beträgt die Gewichtsmenge an Teilchen, die kleiner ist als der D10-Wert 10 Prozent. Bei dem D90-Wert beträgt die Gewichtsmenge an Teilchen, kleiner als der D90-Wert ist 90 Prozent, bezogen auf das Gesamtgewicht der Partikel. Für die Bestimmung der D10-, D50- und D90-Werte kann auf die Vorschrift gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern, und Momenten aus Partikelgrößenverteilungen) zurückgegriffen werden.

Für die erfindungsgemäßen Beschichtungsmassen geeignete erste und zweite Füllstoffe können ausgewählt werden aus der Gruppe bestehend aus calcitischen Füllstoffen, insbesondere Calciumcarbonate, Dolomite, Calcite, Kreide, Dolomit und/oder Aragonite, und silikatischen Füllstoffen, insbesondere Quarziten, Schichtsilikaten, Feldspate, Vulkaniten, Kaolin, Kieselerden und/oder Diatomeenerden, oder deren beliebiger Mischung. Als erste Füllstoffe kommen bevorzugt calcitische Füllstoffe in Betracht, insbesondere Calciumcarbonate.

Der erste Füllstoff kann in einer erfindungsgemäßen Beschichtungsmasse als calcitischer Füllstoffe vorliegen. Alternativ kann der erste Füllstoff darin auch als silikatischer Füllstoff vorliegen. Darüber hinaus ist es möglich, als ersten Füllstoff eine Mischung aus calcitischen und silikatischen Füllstoffen zu verwenden. In gleicher Weise kann in einer erfindungsgemäßen Beschichtungsmasse der zweite Füllstoff ausschließlich als calcitischer oder als silikatischer Füllstoffe vorliegen. Hier ist es ebenfalls möglich, dass als zweite Füllstoffe eine Mischung aus calcitischen und silikatischen Füllstoffen eingesetzt wird. Exemplarisch sei festgehalten, dass die folgenden Kombinationen an ersten und zweiten Füllstoffen für die erfindungsgemäßen Beschichtungsmassen möglich sind: erster Füllstoff calcitisch, zweiter Füllstoff calcitisch; erste Füllstoff calcitisch, zweiter Füllstoff silikatisch; erste Füllstoff silikatisch, zweite Füllstoff calcitisch; erste Füllstoff silikatisch, zweiter Füllstoff silikatisch. Selbstverständlich können bei den vorangehend genannten Kombinationen die ersten und zweiten Füllstoffe jeweils auch Mischungen aus calcitischen und silikatischen Füllstoffen umfassen.

Bei dem in den erfindungsgemäßen Beschichtungsmassen zum Einsatz kommenden organischen Bindemittel handelt es sich vorzugsweise um in Wasser dispergierbare oder in Wasser dispergierte Polymere gebildet aus gleichen oder verschiedenen Monomeren, wobei mindestens eines der Monomere ein Acrylsäureester, Methacrylsäurester, Acrylsäure, Methacrylsäure, Vinylacetat, Vinylchlorid, Versatat, Acrylnitril oder eine vinylaromatische Verbindung, insbesondere Styrol, darstellt.

In einer geeigneten Ausgestaltung der erfindungsgemäßen Beschichtungsmasse liegt der Feststoffanteil des organischen Bindemittels, bezogen auf das Gesamtgewicht der Beschichtungsmasse, im Bereich von 9 bis 30 Gew.-%, bevorzugt im Bereich von 11 bis 25 Gew.-% und besonders bevorzugt Bereich von 12 bis 20 Gew.-%.

Geeignet als Bindemittel bzw. Bindemittelpolymere sind z.B. solche auf Basis der Monomere Carbonsäurevinylester mit 3 bis 20 C-Atomen, beispielsweise Vinylacetat und Vinylpropionat, N-Vinylpyrrolidon und dessen Derivate, Vinylaromaten, beispielsweise Styrol und deren Derivate, Vinylhalogeniden, ethylenisch ungesättigten Carbonsäuren, beispielsweise Acryl- und/oder Methacrylsäure, ethylenisch ungesättigten Carbonsäureestern, beispielsweise Acryl- und/oder Methacrylsäureester mit 1 bis 12 C-Atomen im Alkoholrest, ethylenisch ungesättigten Carbonsäureamiden oder ethylenisch ungesättigten Carbonsäureanhydriden eingesetzt, vorzugsweise in Form von Polymerdispersionen. Besonders bevorzugt wird hierbei auf Polymere und/oder Copolymere (nachfolgend auch kurz (Co)-Polymere genannt) auf (Meth)acrylatbasis, beispielsweise Acrylatbasis, zurückgegriffen. Bei (Co)-Polymeren auf (Meth)acrylatbasis soll es sich im Sinne der vorliegenden Erfindung um solche aus (Meth)acrylsäure und/oder (Meth)acrylsäureestern ((Meth)acrylaten) handeln. Unter dem Begriff (Meth)acrylat bzw. (Meth)acrylsäure werden im Sinne der Erfindung und im Einklang mit anerkannter Notation sowohl Methacrylate bzw. Methacrylsäure als auch Arylate bzw. Acrylsäure subsumiert. Bevorzugt wird auf Homopolymere der Acrylsäure und insbesondere auf Copolymere der Acrylsäure und deren Ester, insbesondere Alkylester, und/oder auf Homopolymere der Methacrylsäure und insbesondere Copolymere der Methacrylsäure und deren Ester und/oder Estern der Acrylsäure, insbesondere Alkylester, zurückgegriffen. Die genannten Copolymere der Acrylsäure mit Alkylacrylaten sind hierbei besonders bevorzugt. Besonders zweckmäßig ist somit der Einsatz von Copolymeren, die enthalten oder gebildet sind aus Methacrylsäure und/oder Acrylsäure und Estern der Methacrylsäure und/oder Estern der Acrylsäure. Unter den in diesem Abschnitt genannten Estern, insbesondere Alkylestern, sind die Methyl-, Ethyl, n-Propyl, i-Propyl, n-Butyl, i-Butyl-, t-Butyl, und/oder Hexylester, z.B. 2-Ethylhexylester, der (Meth)arcrylsäure, vorzugsweise der Acrylsäure, besonders geeignet. In diesem Zusammenhang sind solche Bindemittel bzw. Bindemittelpolymere besonders geeignet, die in Wasser nicht oder nur mäßig quellbar sind. In einer zweckmäßigen Ausgestaltung liegt das Bindemittel bzw. das Bindemittelpolymer oder eine Komponente des Bindemittels in Form einer Polymerdispersion, d.h. in Form einer wässrigen Dispersion vor. Hierbei sind wässrige Bindemitteldispersionen auf Basis von Acrylat-(co)-polymeren besonders geeignet. Daneben können auch wässrige Bindemitteldispersionen auf Basis von Vinylestern, z.B. Vinylacetat, Styrol, Styrolacrylaten, Butadien, Phenylacetylen und/oder Alkydharzsystemen sowie deren Copolymerisaten eingesetzt werden. Des Weiteren kommen als Bindemittel bzw. Bindemittelpolymere auch Polysiloxanharze, insbesondere in Form einer Emulsion, in Betracht. Hierbei kann es sich zum Beispiel um Poly-(dialkylsiloxane) wie Poly(dimethylsiloxane) handeln.

Besonders bevorzugt kommen als organische Bindemittel in den erfindungsgemäßen Beschichtungsmassen Copolymere auf Basis von Vinylacetat und Ethylen, insbesondere Vinylacetat/Ethylen-Copolymere, und/oder Copolymere auf Basis von Vinylaromaten, insbesondere Styrolacrylat-Copolymere, und/oder Copolymere auf Basis von Reinacrylaten zum Einsatz. Reinacrylate umfassen Homo- und insbesondere Copolymere von Acrylsäure, Methacrylsäure sowie deren Ester sowie vorzugsweise Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein.

In einer zweckmäßigen Ausgestaltung stellt das organische Bindemittel, bestehend aus oder umfassend mindestens ein Copolymer auf Basis von Vinylacetat und Ethylen, insbesondere ein Vinylacetat/Ethylen-Copolymer, und/oder ein Copolymer auf Basis von Vinylaromaten, insbesondere Styrolacrylat-Copolymere, bezogen auf den Gewichtsanteil der Trockenmasse, die Hauptkomponente des organischen Bindemittels dar. Besonders bevorzugt stellen Copolymere auf Basis von Vinylacetat und Ethylen, insbesondere Vinylacetat/EthylenCopolymere, bezogen auf den Gewichtsanteil der Trockenmasse, die Hauptkomponente des organischen Bindemittels dar.

In einer bevorzugten Ausführungsform werden als organische Bindemittel mindestens ein Copolymer auf Basis von Vinylacetat und Ethylen, insbesondere Vinylacetat/Ethylen-Copolymere, und mindestens ein Copolymer auf Basis von Vinylaromaten, insbesondere Styrolacrylat-Copolymere, zusammen eingesetzt, insbesondere mit dem mindestens einen Copolymer auf Basis von Vinylacetat und Ethylen als Hauptkomponente. Besonders bevorzugt liegt hierbei die Feststoffmenge an dem mindestens einen Copolymere auf Basis von Vinylacetat und Ethylen, insbesondere dem Vinylacetat/Ethylen-Copolymer, im Bereich von 8 bis 14 Gew.-%, bezogen auf das Gesamtgewicht der Beschichtungsmasse, und die Feststoffmenge an dem mindestens einen Copolymer auf Basis von Vinylaromaten, insbesondere dem Styrolacrylat-Copolymer, im Bereich von 1 bis 4 Gew.-%, bezogen auf das Gesamtgewicht der Beschichtungsmasse.

In den erfindungsgemäßen Beschichtungsmassen liegen in einer zweckmäßigen Ausgestaltung solche Hydrophobierungsmittel vor, die ausgewählt sind aus der Gruppe bestehend aus Wachsen, Fettsäuren, Fettsäuresalzen, Fettsäureestern und Silikonölen, z.B. Polysiloxanen, insbesondere aminofunktionellen Polysiloxanen, oder deren beliebigen Mischungen. Unter den Wachsen kann hierbei zum Beispiel wiederum zurückgegriffen werden auf Silikon-, Polyolefin-, Paraffin-, Montan-, Camauba- oder Amidwachse oder auf beliebige Mischungen der vorangehend genannten Wachse.

Besonders bevorzugt kommen in den erfindungsgemäßen Beschichtungsmassen Paraffin-Wachse zum Einsatz. Die Hydrophobierungsmittel, insbesondere die Wachse, werden im Allgemeinen in Form einer wässrigen Emulsion, insbesondere in Form einer wässrigen Wachsemulsion, eingesetzt. Geeignete Wachsemulsionen umfassen neben dem mindestens einen Wachs, insbesondere Paraffinwachs, häufig auch noch Polyvinylalkohol, mindestens einen Emulgator und Wasser. In diesen Wachsemulsionen können alternativ oder zusätzlich zu Paraffinwachsen auch Montanwachse zugegen sein. Bei Verwendung von Wachsen als Hydrophobierungsmittel gelingt es besonders gut, Rissbildung beim Trocknungsvorgang zu vermeiden. Auch beeinflussen die Hydrophobierungsmittel, insbesondere die Wachse und vor allem Paraffinwachse die selbstnivellierenden Eigenschaften der erfindungsgemäßen Beschichtungsmassen besonders vorteilhaft und wirken sich auch positiv auf das Verarbeitungsverhalten aus.

Der Feststoffanteil des Hydrophobierungsmittels, insbesondere der Feststoffanteil der Wachse, liegt, bezogen auf das Gesamtgewicht der Beschichtungsmasse, üblicherweise im Bereich von 0,5 bis 10 Gew.-%, bevorzugt im Bereich von 1 bis 6 Gew.-% und besonders bevorzugt im Bereich von 1,5 bis 4,5 Gew.-%.

Besonders gute Verarbeitungseigenschaften gepaart mit einer qualitativ hochwertigen Oberfläche der aus den erfindungsgemäßen Beschichtungsmassen erhaltenen Beschichtungen erhält man auch dadurch, dass der Feststoffanteil an organischem Bindemittel, bezogen auf das Gesamtgewicht der Beschichtungsmasse, im Bereich von 11 bis 22 Gew.-%, bevorzugt im Bereich von 12 bis 19 Gew.-% liegt und das gleichzeitig der Feststoffanteil an Hydrophobierungsmittel, insbesondere an Wachsen, bezogen auf das Gesamtgewicht der Beschichtungsmasse, im Bereich von 1,0 bis 6 Gew.-%, bevorzugt im Bereich von 1,5 bis 4,5 Gew.-%, liegt.

In einer weiteren Ausführungsform umfassen die erfindungsgemäßen Beschichtungsmassen ferner mindestens ein Fasermaterial. Hierbei sind Glas- oder Cellulosefasern oder Mischungen aus Glas- und Cellulosefasern besonders geeignet. Bei dem Fasermaterial handelt es sich vorzugsweise um Schnittfasern. Die mechanischen Eigenschaften der aus den erfindungsgemäßen Beschichtungsmassen erhaltenen Beschichtungen sind insbesondere dann besonders vorteilhaft, wenn das Fasermaterial über eine durchschnittliche Faserlänge im Bereich von 15 bis 70 µm, vorzugsweise im Bereich von 25 bis 60 µm und besonders bevorzugt im Bereich von 30 bis 50 µm verfügt.

Die erfindungsgemäßen Beschichtungsmassen können mit üblichen Additiven ausgestattet sein. Bevorzugte Additive sind ausgewählt aus der Gruppe bestehend aus Verdickern, Netzmitteln, Dispergiermitteln, Entschäumern, Konservierungsmitteln und pH-Einstellmitteln. Selbstverständlich können auch beliebige Mischungen der vorangehend genannten Additivkomponenten eingesetzt werden. Besonders bevorzugt werden als Additive Verdicker eingesetzt. Das mindestens eine Additiv liegt in der erfindungsgemäßen Beschichtungsmasse üblicherweise in einer Menge im Bereich von 0,1 bis 10 Gew.-%, vorzugsweise im Bereich von 0,2 bis 8 Gew.-% und besonders bevorzugt im Bereich von 0,3 bis 5 Gew.-%, jeweils bezogen auf das Gesamtgewicht, vor.

Geeignete Verdicker können zum Beispiel ausgewählt sein aus der Gruppe bestehend aus Polyurethanverdickern, Acrylatverdickern, Polyether-Polyol-Verdickern, Verdickern auf Polysaccharidbasis, insbesondere Verdickern auf Basis von Celluloseethern oder modifizierten Celluloseethern, Schichtsilikaten und organisch modifizierten Schichtsilikaten. Selbstverständlich kann auch auf beliebige Mischungen der vorangehend genannten Verdicker zurückgegriffen werden. Assoziative Verdicker stellen besonders geeignete Verdicker dar. Exemplarisch seien als assoziative Verdicker modifizierte Zellulose, Polyurethan-Verdicker und Polysaccharid-Verdicker genannt. Für viele Anwendungen hat es sich als günstig erwiesen, auf Mischungen an Verdicktern zurückzugreifen, beispielsweise auf modifizierte Cellulose- und Polyurethan-Verdicker.

Insbesondere mit Hilfe der Menge an Verdicker kann maßgeblich Einfluss genommen werden auf die Viskosität der erfindungsgemäßen Beschichtungsmasse.

Solche erfindungsgemäßen Beschichtungsmassen, insbesondere in Form von Dispersionssilikatfarben, Kunststoffdispersionsfarben, Siliconharzfarben und Silikatfarben, liefern ein besonders günstiges, spritzarmes bzw. spritzfreies Rheologieprofil, die dadurch gekennzeichnet sind, dass der mindestens eine Verdicker ein Acrylatverdicker oder ein Polyurethanverdicker oder ein Verdicker auf Polysaccharidbasis oder ein Verdicker auf Polyether-Polyolbasis oder ein Schichtsilikat ist oder eine beliebige Mischung hiervon. Geeignete Verdickermischungen umfassen z.B. Mischungen aus mindestens einem Acrylatverdicker und mindestens einem Verdicker auf Polysaccharidbasis oder Mischungen aus mindestens einem Polyurethanverdicker und mindestens einem Verdicker auf Polysaccharidbasis oder Mischungen aus mindestens einem Acrylatverdicker und mindestens einem Verdicker auf Basis von Schichtsilikaten.

Geeignete Polyurethan-Verdicker basieren z.B. auf einem hydrophilen Mittelblock aus Poly(ethylenoxid) (PEO)-Einheiten, an den durch Umsetzung mit einem Diisocyanat und einem Fettalkohol über Urethanbindungen zwei hydrophobe Endsegmente angeknüpft wurden. Bei Polyurethan-Verdickern handelt es sich somit im Allgemeinen um nichtionische verzweigte oder unverzweigte Blockcopolymere aus Polyethylenoxid-Ketten, Polypropylenoxid-Ketten oder Poly(ethylenoxid-propylenoxid)-Ketten, die über Urethanbindungen miteinander verknüpft sind und die endständige langkettige Alkyl- oder Alkylengruppen mit 8 bis 30, vorzugsweise 10 bis 24 und besonders bevorzugt 12 bis 20 Kohlenstoffatomen oder Aryl- oder alkylierte Arylgruppen mit 6 bis 30, vorzugsweise 6 bis 20 Kohlenstoffatomen tragen. Typische Alkylgruppen sind beispielsweise Dodecyl- oder Stearyl-Gruppen, eine typische Alkylengruppe ist beispielsweise eine Oleylgruppe, eine typische Arylgruppe ist die Phenylgruppe und eine typische alkylierte Arylgruppe ist beispielsweise eine Nonylphenylgruppe. Geeignete Polyurethan-Verdicker sind dem Fachmann bekannt. Das Molekulargewicht solcher Polyurethanverdieker liegt üblicherweise im Bereich von 10⁴ bis 10⁵ g/mol.

Unter den Acrylatverdickern sind sogenannte HASE-Verdicker (hydrophobically modified alkali soluble emulsion) bevorzugt, und zwar insbesondere auf Basis von Copolymeren enthaltend oder bestehend aus Methylmethacrylat und/oder Methacrylsäure und Ethylacrylat. HASE-Verdicker können z.B. gewonnen werden aus Methacrylsäure als hydrophilem Monomer, einem Alkylvinylether als hydrophobem Monomer sowie Ethylacrylat, Butylacrylat und/oder Methylmethacrylat als weiterem Monomer zur Einstellung eines optimalen Gleichgewichts zwischen Wasserempfindlichkeit und Wasserverträglichkeit. Auch können vernetzte HASE-Verdicker eingesetzt werden. Diese verfügen regelmäßig über eine eingeschränkte Wasserlöslichkeit. Besonders geeignete Acrylatverdicker, insbesondere der HA-SE-Acrylatverdicker, weisen ein zahlenmittleres Molekulargewicht Mₙ im Bereich von 100 bis 300 kDa, bevorzugt im Bereich von 150 bis 250 kDa, z.B. im Bereich von 170 bis 200 kDa, und/oder ein gewichtsmittleres Molekulargewicht Mₙ im Bereich von 400 bis 800 kDa, bevorzugt im Bereich von 500 bis 700 kDa, z.B. im Bereich von 550 bis 650 kDa, auf.

Geeignete Verdicker auf Polysaccharidbasis umfassen z.B. Cellulose, mikrokristalline Cellulose, Celluloseether und modifizierte Celluloseether, insbesondere hydrophob modifizierte Celluloseether, und auch Polysaccharide, die sich von den Galactomannosen ableiten, z.B. Polygalactomannosen, des Weiteren Polysaccharide auf Basis von Carrageen, Guarkernmehl, Xanthan und Johannisbrotkernmehl. Beispielhaft seien als modifizierte Celluloseether Methylcellulose, Hydroxypropylmethylcellulose, Hydroxyethylcellulose, Hydroxypropylcellulose, Ethylhydroxyethylcellulose und Natriumcarboxymethylcellulose, genannt. Als hydrophob modifizierte Celluloseether kommen z.B. die Reaktionsprodukte von Hydroxyethylcellulose oder Hydroxypropylcellulose mit dem Glycidylether von N-Ethyl-N-2-hydroxyethylperfluoroctansulfonamid (FC10-HEC) sowie nichtionische Celluloseether mit Methyl-, Hydroxyethyl- und Hydroxypropyl-Resten sowie mit einem langkettigen, über eine Etherbindung gebundenen Alkylrest mit 10 bis 24 Kohlenstoffatomen in Betracht.

Geeignete Verdicker auf Basis von Schichtsilikaten können ausgewählt sein aus der Gruppe bestehend aus Smectit, Montmorillonit, Hectorit und Bentonit oder deren Mischungen. Neben den herkömmlichen, d.h. den nicht organisch modifizierten bzw. nicht in delamierter Form vorliegenden Schichtsilikaten, kann man zusätzlich oder alternativ des Weiteren auch auf organisch modifizierte Schichtsilikate als Verdicker zurückgreifen. Organisch modifizierte Schichtsilikate sind dem Fachmann bekannt und sind auch im Handel erhältlich. Hierbei handelt es sich um sogenannte delaminierte Schichtsilikate, bei denen in der Schichtenstruktur, d.h. zwischen den Schichten kationische organische Verbindungen vorliegen. Man spricht hier auch von Interkalationsverbindungen. Besonders bevorzugt erhält man solche delaminierten Schichtsilikate mittels Modifizierung mit Alkylammonium- oder Ammoniumalkoxylat-Verbindungen.

Geeignete Polyether-Polyol-Verdicker sind dem Fachmann bekannt. Exemplarisch sei auf "Wässrige Siliconharz-Beschichtungssysteme für Fassade", Wolfgang Schultze, 2. Aufl., Seiten 345 bis 347, verwiesen (ISBN 3-8169-1966-9).

Geeignete Netzmittel umfassen z.B. verseifte oder insbesondere unverseifte Ethoxylate.

Als geeignete Dispergiermittel kommen z.B. Tetrakaliumdiphosphat, Natriumpolyphosphat, Natriumpolyacrylat oder eine Mischung enthaltend wasserlösliches Diphosphat, insbesondere Tetrakaliumdiphosphat, in Betracht.

Das Viskosität- bzw. Rheologie-Verhalten der erfindungsgemäßen Beschichtungsmassen kann in einer geeigneten Ausgestaltung mittels eines Rotationsrheometers bestimmt werden. Die Viskositäten der erfindungsgemäßen Beschichtungsmassen sind gemäß DIN 53019 (Ausgabe 05/1980) zu ermitteln. Diese Viskositäten lassen sich mit dem Rotationsrheometer Haake Rheostress 1 der Firma Thermo Scientific unter Verwendung der Software Haake Rheo Win Version 4.30.0030 bestimmen. Um vergleichbare Ergebnisse zu erhalten, sollten die Messungen bei konstanter Raumtemperatur, beispielsweise bei 23 °C ±0,20 °C vorgenommen werden. Im Allgemeinen reicht es aus, eine Rotationsrampe von 0 bis 1500 l/s im Zeitraum von 180 s zu fahren. Hierbei wird die Messung derart vorgenommen, dass zunächst für 180 s das Messsystem temperiert wird, anschließend über 180 s die Rotationsgeschwindigkeit von 0 auf 1500 l/s gesteigert und sodann für weitere 180 s die Rotationsgeschwindigkeit von 1500 auf 0 l/s zurückgefahren wird. Die Viskosität wird dabei aus dem dritten Segment (absteigender Ast) bei 400 l/s und 1200 l/s ermittelt. Form und Material bzw. die Messgeometrie der Messapparatur bzw. des Rotors basieren zweckmäßigerweise auf der Spezifikation Z20DIN.

Bevorzugt sind solche Beschichtungsmassen, die über eine Viskosität η im Bereich von 0,5 bis 4,0 Pa x s, insbesondere im Bereich von 1,0 bis 3,5 Pa x s und besonders bevorzugt im Bereich von1,8 bis 2,7 Pa x s, ermittelt gemäß DIN 53019 (Ausgabe 05/1980) bei 400 l/s und 23 °C ±0,20 °C, verfügen und/oder die über eine Viskosität η im Bereich von 0,1 bis 2,5 Pa x s, bevorzugt im Bereich von 0,3 bis 2,0 Pa x s und besonders bevorzugt im Bereich von 0,7 bis 1,5 Pa x s, ermittelt gemäß DIN 53019 (Ausgabe 05/1980) bei 1200 l/s und 23 °C ±0,20 °C, verfügen.

Die erfindungsgemäße Beschichtungsmasse, wie sie für die Herstellung von Beschichtunggen auf Oberflächen, beispielsweise Decken- oder Wandbeschichtungen zum Einsatz kommt, enthält stets Wasser. Für viele Anwendungen hat es sich als völlig hinreichend erwiesen, dass der Anteil an Wasser, bezogen auf das Gesamtgewicht der Beschichtungsmasse, im Bereich von 8 bis 40 Gew.-%, bevorzugt im Bereich von 9 bis 35 Gew.-% und besonders bevorzugt im Bereich von 9 bis 25 Gew.-% liegt.

Die der Erfindung zu Grunde liegende Aufgabe wird des Weiteren gelöst durch eine Beschichtung erhalten oder erhältlich durch Applizieren der erfindungsgemäßen Beschichtungsmasse und Trocknen der applizierten Beschichtungsmasse.

Die erfindungsgemäßen Beschichtungsmassen sowie die erfindungsgemäßen Beschichtungen enthalten in einer bevorzugten Ausführungsform
von 11 bis 37 Gew.-%, insbesondere von 16 bis 28 Gew.-%, an Feststoffanteil, bezogen auf das Gesamtgewicht der Beschichtungstrockenmasse bzw. der Beschichtung, an organischem Bindemittel,
von 25 bis 73 Gew.-%, insbesondere von 37 bis 56 Gew.-%, an Feststoffanteil, bezogen auf das Gesamtgewicht der Beschichtungstrockenmasse bzw. der Beschichtung, an erstem Füllstoff,
von 0 bis 30 Gew.-%, insbesondere von 5 bis 20 Gew.-%, an Feststoffanteil, bezogen auf das Gesamtgewicht der Beschichtungstrockenmasse bzw. der Beschichtung, an zweitem Füllstoff,
von 1 bis 13 Gew.-%, insbesondere von 2 bis 6 Gew.-%, an Feststoffanteil, bezogen auf das Gesamtgewicht der Beschichtungstrockenmasse bzw. der Beschichtung, an Hydrophobierungsmittel,
von 0,2 bis 10 Gew.-%, insbesondere von 0,4 bis 6 Gew.-%, an Feststoffanteil, bezogen auf das Gesamtgewicht der Beschichtungstrockenmasse bzw. der Beschichtung, an Additiven,
von 0 bis 25 Gew.-%, insbesondere von 0,1 bis 18,5 oder 1 bis 15 Gew.-%, an Feststoffanteil, bezogen auf das Gesamtgewicht der Beschichtungstrockenmasse bzw. der Beschichtung, an Pigmenten und/oder Farbstoffen,
wobei die Anteile der die Trockenbeschichtungsmasse bzw. der die Beschichtung bildenden Komponenten jeweils 100 Gew.-% ergeben.

Die erfindungsgemäßen Beschichtungen verfügen für viele zweckmäßige Ausgestaltungen über eine durchschnittliche Nassschichtdicke im Bereich von 0,1 bis 3,0 mm, vorzugsweise im Bereich von 0,6 bis 2,5 mm und besonders bevorzugt im Bereich von 0,7 bis 2,0 mm. Ganz besonders bevorzugt liegt die Nassschichtdicke der erfindungsgemäßen Beschichtungen im Bereich von 0,8 bis 1,5 mm. Die Nassschichtdicke wird hierbei im Sinne der Erfindung unmittelbar nach dem Applizieren der erfindungsgemäßen Beschichtungsmasse auf einer Oberfläche unter Anwendung des standardisierten Verfahrens gemäß DIN EN ISO 2808 (Fassung Mai 2007) mittels Messkamms (Kapitel 4.2) ermittelt.

Es hat sich überraschenderweise herausgestellt, dass sich mit den erfindungsgemäßen Beschichtungsmassen in einem einzigen Arbeitsgang ohne weiteres Beschichtungen erhalten lassen, die die Nassabriebsbeständigkeit der Klasse 1 nach DIN EN 13300 besitzen.

Mit den erfindungsgemäßen Beschichtungsmassen ist es zudem sehr einfach möglich, auch solche Beschichtungen zu erhalten, auf denen ein Gewebe, insbesondere Armierungsgewebe, oder Vlies aufliegt oder in denen ein Gewebe, insbesondere Armierungsgewebe, oder Vlies vollständig oder partiell eingebettet ist.

Die der Erfindung zugrunde liegende Aufgabe wird des Weiteren gelöst durch ein Bauteil wie Wand, Boden oder Decke, das auf einer Oberfläche eine erfindungsgemäße Beschichtung aufweist.

Die beschichtbare Bauteiloberfläche kann zum Beispiel Bestandteil mindestens einer Gipsfaserplatte, Dämmmaterialplatte, Gipskartonplatte, Leichtbetonplatte, mineralisch gebundenen Platte, Massivholzplatte, Holzwerkstoffplatte, Betonwand, Natursteinwand, Kalksandsteinwand und/oder Klinkerwand, insbesondere Gipskartonplatte, sein.

Die der Erfindung zu Grunde liegende Aufgabe wird des Weiteren gelöst durch ein Verfahren zur Herstellung einer erfindungsgemäßen Beschichtung, bei dem man die erfindungsgemäße Beschichtungsmasse maschinell oder manuell auf eine Oberfläche eines Bauteils aufbringt. Für die maschinelle Aufbringung verwendet man bevorzugt sogenannte Airless-Spritzgeräte. Hierbei sind solche Airless-Geräte besonders geeignet, die mit einer Flachstrahldüse ausgestattet sind. Die Düsengröße liegt in einer zweckmäßigen Ausgestaltung im Bereich von 0,020" bis 0,040", insbesondere im Bereich von 0,023" bis 0,031", besonders bevorzugt im Bereich von 0,025" bis 0,029". Für das manuelle Applizieren der erfindungsgemäßen Beschichtungsmasse auf einer Oberfläche eines Bauteils kann auf dem Fachmann bekannte Rollen zurückgegriffen werden.

Das erfindungsgemäße Verfahren zeichnet sich vor allem dadurch aus, dass man bereits mit einem einzigen Arbeitsschritt zu einer fertigen Beschichtung gelangt, die keiner weiteren Veredelung oder Überarbeitung mehr bedarf. Dies ist insbesondere dann der Fall, wenn die Beschichtungsmasse bereits Pigmente und/oder Farbstoff enthält. Mit der erfindungsgemäßen Beschichtungsmasse gelingt es, zu sehr glattflächigen Beschichtungen zu gelangen. Die Anwendungsbreite der erfindungsgemäßen Beschichtungsmassen zeigt sich auch darin, dass nicht nur Beschichtungen mit äußerst glatten Oberflächen zugänglich sind, sondern dass sich ebenfalls strukturierte Beschichtungsoberflächen erhalten lassen. Alternativ ist es daher ebenfalls möglich, über die Verwendung der erfindungsgemäßen Beschichtungsmassen strukturierte Beschichtungen zu erhalten. Dies kann zum Beispiel im Wege eines sich an den Applizierungsschritt anschließenden Strukturierungsschrittes geschehen. Alternativ oder zusätzlich ist es möglich, Strukturierungsmittel, insbesondere Flakes, vor der maschinellen oder manuellen Aufbringung auf eine Oberfläche eines Bauteils in die erfindungsgemäße Beschichtungsmasse einzubringen. Derartige Strukturierungsmittel wie Flakes können zusätzlich oder alternativ auch nach der Aufbringung der Beschichtungsmasse in die auf der beschichtbaren Oberfläche des Bauteils vorliegenden Beschichtung eingearbeitet, beispielsweise eingeblasen werden.

Erfindungsgemäße Beschichtungsmassen eignen sich insbesondere für die Herstellung von Wand- und Deckenbeschichtungen. Es ist aber ebenfalls möglich, mit Hilfe der erfindungsgemäßen Beschichtungsmassen zu Bodenbeschichtungen zu gelangen. Die erfindungsgemäßen Beschichtungen können sowohl als Neubeschichtung wie auch als Renovierungsbeschichtung verwendet werden.

Der vorliegenden Erfindung lag die überraschende Erkenntnis zugrunde, dass sich mit den erfindungsgemäßen Beschichtungsmassen in einem einzigen Arbeitsgang Beschichtungen auf Q2-Flächen oder auf Flächen, die nicht Gipskartonplatten sind und die gleichwohl den Anforderungen, die an Q2-Flächen gestellt werden, in entsprechender Weise erfüllen, d.h. die im Wesentlichen analog zu Q2-Flächen sind, erhalten lassen, welche selber die Qualitätsstufe Q4 erfüllen bzw. bei Flächen, die nicht Gipskartonplatten sind, die entsprechenden Anforderungen, die an das Vorliegen einer Q4-analogen Beschichtungsqualität gestellt werden, erfüllen, und zwar selbst bei Aufbringung mittels Rolle. Die erfindungsgemäßen Beschichtungsmassen eignen sich dabei insbesondere für die Beschichtung von Wand- und Deckenoberflächen im Innenbereich. Um beispielsweise Innenwände aus Gipskartonplatten in einen gebrauchsfertigen Zustand zu überführen, genügt es bei Anwendung der vorliegenden Erfindung, die Fugen der verlegten Gipskartonplatten zunächst einer Q2-Verspachtelung zu unterziehen bzw. die Oberflächen anderer Wandkörper in eine Beschichtungsqualität zu überführen, die der Q2-Qualitätsstufe entspricht. Sodann kann, in der Regel ohne ein vorgeschaltetes Schleifen der verspachtelten Fugen, bereits die erfindungsgemäße Beschichtungsmasse maschinell oder manuell aufgebracht werden. Weitere Bearbeitungsschritte sind in der Regel nicht erforderlich. Für die maschinelle Auftragung kann auf herkömmliche Spritzgeräte, insbesondere Airless-Spritzgeräte zurückgegriffen werden. Bei Verwendung der erfindungsgemäßen Beschichtungsmassen hat sich gezeigt, dass es regelmäßig nicht zu Verstopfungen der Spritzdüsen kommt. Auch kann die Gefahr der Kraterbildung bei der Herstellung der Beschichtungen bei Einsatz von Spritzgeräten erheblich reduziert werden. Diese sehr anwenderfreundlichen Eigenschaften der erfindungsgemäßen Beschichtungsmasse, welche sogleich in einem Arbeitsschritt eine oberflächenfertige Beschichtung liefert, dürften, ohne an eine bestimmte Theorie gebunden zu sein, mit den selbstnivellierenden und füllenden Eigenschaften der Beschichtungsmasse zusammenhängen.

Indem es die erfindungsgemäßen Beschichtungsmassen ohne weiteres gestatten, auch mit Farbstoffen und/oder Pigmenten versehen zu werden, erhält man z.B. auf Trockenbauwänden, beispielsweise Gipskartonplatten, unmittelbar oberflächenfertige, eingefärbte Beschichtungen. Damit ermöglicht die Erfindung, auf die üblicherweise bei der Herstellung von Wand-und Deckenbeschichtungen anzuwendenden Schritte des Grundierens, des Spachtelns und des Streichens zu verzichten. Von Vorteil ist ferner auch, dass sich bereits mit sehr geringen Mengen an Pigmenten und/oder Farbstoffen sehr intensive Farbeffekte erzielen lassen. Ein derart effizientes Abtönen gelingt überraschender Weise auch mit sehr dunklen Farbtönen.

Darüber hinaus ist von Vorteil, dass sich beim Einsatz der erfindungsgemäßen Beschichtungsmassen der Materialverbrauch in Grenzen hält. Denn bereits mit Beschichtungen mit einer durchschnittlichen Dicke von 0,2 bis 2 mm, insbesondere von 0,5 bis 1 mm lassen sich einwandfreie Oberflächen erhalten, die für den dauerhaften Gebrauch ohne weiteres geeignet sind.

Die mit den erfindungsgemäßen Beschichtungsmassen erhältlichen Beschichtungen sind zudem wesentlich weniger reparaturanfällig. Bei mechanischen Beschädigungen an der Oberfläche der Beschichtung ist ein Nachstreichen nicht erforderlich. Das Pigment bzw. der Farbstoff ist gleichmäßig über die gesamte Dicke der Beschichtung verteilt.

Mit den erfindungsgemäßen Beschichtungsmassen lassen sich die Kosten bei der Herstellung oberflächenfertiger Beschichtungen, insbesondere im Innenbereich, erheblich reduzieren. Es werden stets qualitativ hochwertige Oberflächen erhalten. Insbesondere ist es aufgrund der selbstnivellierenden erfindungsgemäßen Beschichtungsmasse auch möglich, sehr glatte Oberflächen zu erhalten.

Von besonderem Vorteil ist auch, dass die mit den erfindungsgemäßen Beschichtungsmassen erhaltenen Beschichtungen beim Abtrocknen nicht reißen, und zwar weder bei sehr dünnem noch bei sehr dickem Beschichtungsauftrag. Die Vielseitigkeit der erfindungsgemäßen Beschichtungsmassen wird auch dadurch dokumentiert, dass sich Vliese und Gewebe, beispielsweise Armierungsgewebe, in üblicher Weise in die Beschichtungsmassen einbetten lassen. Hierbei ist auch von Vorteil, dass mit den erfindungsgemäßen Beschichtungsmassen regelmäßig Beschichtungen mit höheren Schichtdicken als mit bekannten Beschichtungsmaterialien zugänglich sind. Zudem garantieren die erfindungsgemäßen Beschichtungsmassen eine sehr gute Standsicherheit.

Die große Nutzerfreundlichkeit der erfindungsgemäßen Beschichtungsmassen kommt auch dadurch zum Ausdruck, dass sich diese Beschichtungsmassen auf jeder herkömmlichen Abtönmaschine, beispielsweise am Point of Sale, mittels üblicher Pigmente abtönen lassen, und zwar ohne dass weitere Spezialpigmente erforderlich sind. Auch können die erfindungsgemäßen Beschichtungsmassen in hellen Farbtönen eingefärbt werden.

Von Vorteil bei den mit den erfindungsgemäßen Beschichtungsmassen erhältlichen Beschichtungen ist weiterhin deren ausgeprägte Nassabriebsbeständigkeit. Demgemäß lassen sich Schmutzablagerungen ohne Beeinträchtigung der Beschichtungsoberfläche abwaschen bzw. entfernen. Auch sind die Beschichtungsoberflächen sehr kratzbeständig.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Beschichtungsmasse, umfassend
mindestens 9 Gew.-%, insbesondere mindestens 11 Gew.-%, an Feststoffanteil, bezogen auf das Gesamtgewicht der Beschichtungsmasse, mindestens eines organischen Bindemittels,
mindestens ein Hydrophobierungsmittel,
mindestens 20 Gew.-%, insbesondere mindestens 30 Gew.-%, bezogen auf das Gesamtgewicht der Beschichtungsmasse, mindestens eines ersten Füllstoffs, wobei der erste Füllstoff einen D50-Wert von mindestens 10 µm, bevorzugt von mindestens 20 µm und besonders bevorzugt von mindestens 35 µm sowie insbesondere einen D50 Wert im Bereich von 10 bis 60 µm, aufweist,
gegebenenfalls mindestens ein Additiv, und
Wasser,
wobei die Anteile der die Beschichtungsmasse bildenden Komponenten jeweils 100 Gew.-% ergeben.

2. Beschichtungsmasse nach Anspruch 1, **dadurch gekennzeichnet, dass** das organische Bindemittel in Wasser dispergierbare oder in Wasser dispergierte Polymere gebildet aus gleichen oder verschiedenen Monomeren umfasst oder darstellt, wobei mindestens eines der Monomere ein Acrylsäureester, Methacrylsäurester, Acrylsäure, Methacrylsäure, Vinylacetat, Vinylchlorid, Versatat, Acrylnitril oder eine vinylaromatische Verbindung, insbesondere Styrol, darstellt, wobei vorzugsweise das organische Bindemittel mindestens ein Copolymer auf Basis von Vinylacetat und Ethylen, insbesondere ein Vinylacetat/Ethylen-Copolymer, und/oder ein Copolymer auf Basis von Vinylaromaten, insbesondere Styrolacrylat-Copolymere, und/oder ein Copolymer auf Basis von Reinacrylaten umfasst oder darstellt.

3. Beschichtungsmasse nach Anspruch 1 oder 2, **dadurch gekennzeichnet, dass** der Feststoffanteil des organischen Bindemittels, bezogen auf das Gesamtgewicht der Beschichtungsmasse, im Bereich von 9 bis 30 Gew.-%, bevorzugt im Bereich von 11 bis 25 Gew.-% und besonders bevorzugt Bereich von 13 bis 22 Gew.-% liegt.

4. Beschichtungsmasse nach einem der vorangehenden Ansprüche, **dadurch gekennzeichnet, dass**
das, insbesondere in Form einer wässrigen Emulsion vorliegende, Hydrophobierungsmittel ausgewählt ist aus der Gruppe bestehend aus Wachsen, insbesondere umfassend Silikon-, Polyolefin-, Paraffin-, Montan-, Carnauba- und/oder Amidwachse, Fettsäuren, Fettsäuresalzen, Fettsäureestern und Silikonölen oder deren beliebigen Mischungen, wobei Paraffin-Wachse besonders bevorzugt sind.

5. Beschichtungsmasse nach einem der vorangehenden Ansprüche, **dadurch gekennzeichnet, dass**
der Feststoffanteil des Hydrophobierungsmittels, bezogen auf das Gesamtgewicht der Beschichtungsmasse, im
Bereich von 0,5 bis 10 Gew.-%, bevorzugt im Bereich von 1,0 bis 6 Gew.-% und besonders bevorzugt im Bereich von 1,5 bis 4,5 Gew.-% liegt.

6. Beschichtungsmasse nach einem der vorangehenden Ansprüche, ferner umfassend
mindestens einen zweiten Füllstoff, mit einem D50-Wert kleiner 15 µm, bevorzugt kleiner oder gleich 10 µm und besonders bevorzugt kleiner oder gleich 7 µm, insbesondere im Bereich von 1 bis 5 µm, und/oder
mindestens ein Fasermaterial, insbesondere Glas- und/oder Cellulosefasern, und/oder mindestens einen Farbstoff und/oder mindestens ein Pigment, insbesondere mindestens ein Pigment.

7. Beschichtungsmasse nach einem der vorangehenden Ansprüche, **dadurch gekennzeichnet, dass**
der Anteil des ersten Füllstoffs im Bereich von 20 bis 60 Gew.-%, bevorzugt im Bereich von 25 bis 50 Gew.-% und besonders bevorzugt im Bereich von 30 bis 45 Gew.-%, jeweils bezogen auf das Gesamtgewicht der Beschichtungsmasse, liegt und/oder
dass der Anteil des zweiten Füllstoffs im Bereich von
1 bis 20 Gew.-%, vorzugsweise im Bereich von 2 bis 18 Gew.-% und besonders bevorzugt im Bereich von 3 bis 16 Gew.-%, bezogen auf das Gesamtgewicht der Beschichtungsmasse, liegt und/oder
dass der Anteil an Farbstoff und/oder Pigment, insbesondere Pigment, im Bereich von 0,1 bis 20 Gew.-%, vorzugsweise im Bereich von 0,5 bis 15 Gew.-% und besonders bevorzugt im Bereich von 1 bis 15 Gew.-%, bezogen auf das Gesamtgewicht, in der Beschichtungsmasse liegt.

8. Beschichtungsmasse nach Anspruch 6 oder 7, **dadurch gekennzeichnet, dass**
der Gesamtanteil an erstem Füllstoff, zweitem Füllstoff und Pigment und/oder Farbstoff, bezogen auf das Gesamtgewicht der Beschichtungsmasse ,im Bereich von 30 bis 60 Gew.-%, bevorzugt im Bereich von 35 bis 60 Gew.-% und besonders bevorzugt im Bereich von 40 bis 55 Gew.-% liegt.

9. Beschichtungsmasse nach einem der Ansprüche 6 bis 8, **dadurch gekennzeichnet, dass**
der Anteil an dem zweiten Füllstoff, bezogen auf das Gesamtgewicht an erstem und zweitem Füllstoff, im Bereich von 5 bis 45 Gew.-%, bevorzugt im Bereich von 10 bis 40 Gew.-% und besonders bevorzugt im Bereich von 20 bis 35 Gew.-% liegt.

10. Beschichtungsmasse nach einem der vorangehenden Ansprüche, **dadurch gekennzeichnet, dass**
der erste Füllstoff einen D10-Wert von mindestens 0,5 µm, bevorzugt von mindestens 1 µm und besonders bevorzugt von mindestens 1,5 µm aufweist und/oder dass der erste Füllstoff einen D90-Wert von mindestens 60 µm, bevorzugt von mindestens 70 µm und besonders bevorzugt von mindestens 80 µm aufweist und/oder der zweite Füllstoff einen D50-Wert von mindestens 0,5 µm, bevorzugt von mindestens 1,0 µm und besonders bevorzugt von mindestens 1,5 µm aufweist und/oder dass der zweite Füllstoff einen D10-Wert von mindestens 0,01 µm, bevorzugt von mindestens 0,05 µm und besonders bevorzugt von mindestens 0,1 µm aufweist und/oder dass der zweite Füllstoff einen D90-Wert von mindestens 2 µm, bevorzugt von mindestens 3 µm und besonders bevorzugt von mindestens 4 µm aufweist.

11. Beschichtungsmasse nach einem der vorangehenden Ansprüche, **dadurch gekennzeichnet, dass**
der erste Füllstoff einen D50-Wert im Bereich von 15 bis 60 µm, bevorzugt im Bereich von 15 bis 50 µm und besonders bevorzugt im Bereich von 20 bis 40 µm aufweist und/oder dass
der erste Füllstoff einen D90-Wert im Bereich von 60 bis 120 µm, bevorzugt im Bereich von 70 bis 110 µm und besonders bevorzugt im Bereich von 80 bis 100 µm aufweist und/oder dass
der erste Füllstoff einen D10-Wert im Bereich von 0,5 bis 5 µm, bevorzugt im Bereich von 1,0 bis 4 µm und besonders bevorzugt im Bereich von 1,5 bis 3 µm aufweist und/oder
der zweite Füllstoff einen D50-Wert im Bereich von 0,5 bis 10 µm, bevorzugt im Bereich von 1,0 bis 8 µm und besonders bevorzugt im Bereich von 1,5 bis 6 µm aufweist und/oder dass
der zweite Füllstoff einen D90-Wert im Bereich von 2 bis 30 µm, bevorzugt im Bereich von 3 bis 20 µm und besonders bevorzugt im Bereich von 4 bis 15 µm aufweist und/oder dass
der zweite Füllstoff einen D10-Wert im Bereich von 0,01 bis 5 µm, bevorzugt im Bereich von 0,05 bis 4 µm und besonders bevorzugt im Bereich von 0,1 bis 2 µm aufweist und/oder dass
das Fasermaterial eine durchschnittliche Faserlänge im Bereich von 15 bis 70 µm, vorzugsweise im Bereich von 20 bis 60 µm und besonders bevorzugt im Bereich von 25 bis 50 µm aufweist und/oder dass
das Pigment, insbesondere Titandioxid, und/oder dass
das Pigment, insbesondere Titandioxid, einen D50-Wert im Bereich von 0,01 bis 8 µm, bevorzugt im Bereich von 0,05 bis 5 µm und besonders bevorzugt im Bereich von 1,0 bis 3 µm aufweist und/oder dass
das Pigment, insbesondere Titandioxid, einen D90-Wert im Bereich von 0,5 bis 12 µm, bevorzugt im Bereich von 1,5 bis 8 µm und besonders bevorzugt im Bereich von 2,0 bis 5 µm aufweist und/oder dass
das Pigment, insbesondere Titandioxid, einen D10-Wert im Bereich von 0,01 bis 3 µm, bevorzugt im Bereich von 0,05 bis 1,5 µm und besonders bevorzugt im Bereich von 0,1 bis 1,0 µm aufweist.

12. Beschichtungsmasse nach einem der vorangehenden Ansprüche, **dadurch gekennzeichnet, dass**
das Additiv ausgewählt ist aus der Gruppe bestehend aus Verdicker, Netzmittel, Dispergiermittel, Entschäumer, Konservierungsmittel und pH-Einstellmittel oder einer beliebigen Mischung der vorangehenden Substanzen, insbesondere einen Verdicker umfasst und/oder dass das mindestens eine Additiv in einer Menge im Bereich von 0,1 bis 10 Gew.-%, vorzugsweise im Bereich von 0,2 bis 8 Gew.-% und besonders bevorzugt im Bereich von 0,3 bis 5 Gew.-%, jeweils bezogen auf das Gesamtgewicht, in der Beschichtungsmasse vorliegt.

13. Beschichtungsmasse nach einem der vorangehenden Ansprüche, **dadurch gekennzeichnet, dass**
der Anteil an Wasser, bezogen auf das Gesamtgewicht der Beschichtungsmasse, im Bereich von 8 bis 40 Gew.-%, bevorzugt im Bereich von 9 bis 35 Gew.-% und besonders bevorzugt im Bereich von 9 bis 25 Gew.-% liegt.

14. Beschichtungsmasse nach einem der vorangehenden Ansprüche, **dadurch gekennzeichnet, dass**
der Feststoffanteil an organischem Bindemittel, bezogen auf das Gesamtgewicht der Beschichtungsmasse, im Bereich von 11 bis 25 Gew.-%, bevorzugt im Bereich von 12 bis 20 Gew.-%, und dass der Feststoffanteil an Hydrophobierungsmittel, insbesondere an Wachsen, bezogen auf das Gesamtgewicht der Beschichtungsmasse, im Bereich von 1,0 bis 6 Gew.-%, bevorzugt im Bereich von 1,5 bis 4,5 Gew.-%, liegt.

15. Beschichtungsmasse nach einem der vorangehenden Ansprüche, **dadurch gekennzeichnet, dass**
diese über eine Viskosität η im Bereich von 0,5 bis 4,0 Pa x s, insbesondere im Bereich von 1,0 bis 3,5 Pa x s und besonders bevorzugt im Bereich von1,8 bis 2,7 Pa x s, ermittelt gemäß DIN 53019 (Ausgabe 05/1980) bei 400 l/s und 23 °C ±0,20 °C, verfügen und/oder über eine Viskosität η im Bereich von 0,1 bis 2,5 Pa x s, bevorzugt im Bereich von 0,3 bis 2,0 Pa x s und besonders bevorzugt im Bereich von 0,7 bis 1,5 Pa x s, ermittelt gemäß DIN 53019 (Ausgabe 05/1980) bei 1200 l/s und 23 °C ±0,20 °C, verfügen.

16. Beschichtungsmasse nach einem der vorangehenden Ansprüche, **dadurch gekennzeichnet, dass**
der erste Füllstoff einen D50-Wert im Bereich von 15 bis 50 µm, bevorzugt im Bereich von 20 bis 40 µm, einen D90-Wert im Bereich von 70 bis 110 µm, bevorzugt im Bereich von 80 bis 100 µm, und einen D10-Wert im Bereich von 1,0 bis 4 µm, bevorzugt im Bereich von 1,5 bis 3 µm, aufweist und/oder dass der zweite Füllstoff einen D50-Wert im Bereich von 1,5 bis 8 µm, bevorzugt im Bereich von 2,0 bis 6 µm, einen D90-Wert im Bereich von 4 bis 20 µm, bevorzugt im Bereich von 5 bis 15 µm, und einen D10-Wert im Bereich von 0,05 bis 4 µm, bevorzugt im Bereich von 0,08 bis 2 µm, aufweist.

17. Beschichtung erhalten oder erhältlich durch Applizieren der Beschichtungsmasse nach einem der vorangehenden Ansprüche auf einer beschichtbaren Oberfläche und Trocknen der applizierten Beschichtungsmasse.

18. Beschichtung, insbesondere nach Anspruch 17, oder Beschichtungsmasse nach einem der Ansprüche 1 bis 16, enthaltend
von 11 bis 37 Gew.-%, insbesondere von 16 bis 28 Gew.-%, an Feststoffanteil, bezogen auf das Gesamtgewicht der Beschichtungstrockenmasse, an organischem Bindemittel,
von 25 bis 73 Gew.-%, insbesondere von 37 bis 56 Gew.-%, an Feststoffanteil, bezogen auf das Gesamtgewicht der Beschichtungstrockenmasse, an erstem Füllstoff, von 0 bis 30 Gew.-%, insbesondere von 5 bis 20 Gew.-%, an Feststoffanteil, bezogen auf das Gesamtgewicht der Beschichtungstrockenmasse, an zweitem Füllstoff, von 1 bis 13 Gew.-%, insbesondere von 2 bis 6 Gew.-%, an Feststoffanteil, bezogen auf das Gesamtgewicht der Beschichtungstrockenmasse, an Hydrophobierungsmittel,
von 0,2 bis 10 Gew.-%, insbesondere von 0,4 bis 6 Gew.-%, an Feststoffanteil, bezogen auf das Gesamtgewicht der Beschichtungstrockenmasse, an Additiven,
von 0 bis 25 Gew.-%, insbesondere von 0,1 bis 18,5 Gew.-% oder von 1 bis 15 Gew.-%, an Feststoffanteil, bezogen auf das Gesamtgewicht der Beschichtungstrockenmasse, an Pigmenten und/oder Farbstoffen,
wobei die Anteile der die Trockenbeschichtungsmasse bildenden Komponenten jeweils 100 Gew.-% ergeben.

19. Beschichtung nach Anspruch 17 oder 18, **dadurch gekennzeichnet, dass** diese über eine durchschnittliche Nassschichtdicke im Bereich von 0,1 bis 3,0 mm, vorzugsweise im Bereich von 0,6 bis 2,5 mm und besonders bevorzugt im Bereich von 0,7 bis 2,0 mm und insbesondere im Bereich von 0,8 bis 1,5 mm verfügt.

20. Beschichtung nach einem der Ansprüche 17 bis 19, **gekennzeichnet durch** mindestens ein auf der Beschichtung aufliegendes oder vollständig oder partiell in die Beschichtung eingebettetes Gewebe, insbesondere Armierungsgewebe, oder Vlies.

21. Bauteil, insbesondere Wand oder Decke, enthaltend auf einer beschichtbaren Oberfläche eine Beschichtung nach einem der Ansprüche 17 bis 20.

22. Bauteil nach Anspruch 21, **dadurch gekennzeichnet, dass** die beschichtbare beschichtete Oberfläche Bestandteil mindestens einer Gipsfaserplatte, Dämmmaterialplatte, Gipskartonplatte, Leichtbetonplatte, mineralisch gebundenen Platte, Massivholzplatte, Holzwerkstoffplatte, Betonwand, Natursteinwand, Kalksandsteinwand und/oder Klinkerwand, insbesondere Gipskartonplatte, ist.

23. Verfahren zur Herstellung einer Beschichtung nach einem der Ansprüche 17 bis 20, **dadurch gekennzeichnet, dass**
man die Beschichtungsmasse nach einem der Ansprüche 1 bis 16 maschinell, insbesondere mit einem Airless-Gerät, vorzugsweise ausgestattet mit einer Flachstrahldüse, vorzugsweise mit einer Düsengröße im Bereich von 0,020" bis 0,040", insbesondere im Bereich von 0,023" bis 0,0311", besonders bevorzugt im Bereich von 0,025" bis 0,029", oder manuell, insbesondere mittels Rolle, auf eine beschichtbare Oberfläche eines Bauteils aufbringt.

24. Verfahren nach Anspruch 23, **dadurch gekennzeichnet, dass** dieses ein einstufiges Verfahren ist.

25. Verwendung der Beschichtungsmasse nach einem der Ansprüche 1 bis 16 für die, insbesondere einstufige, Herstellung von, insbesondere selbstnivellierenden und/oder oberflächenfertigen und/oder glatten, Wand- und/oder Deckenbeschichtungen.
